# EUROPEAN PATENT APPLICATION

(11) **EP 4 571 528 A1**
(43) Date of publication of application: **18.06.2025**
(21) Application number: 23217025.8
(22) Date of filing: 15.12.2023
(51) Int. Cl.: G06F 16/182, G06F 16/23, G06F 16/27, H04L 67/104, H04L 67/1095

(54) **METHOD AND DEVICES FOR EXCHANGING SHARED DATA STORED IN A NODE OF A NETWORK WITH OTHER NODES OF THE NETWORK**

(71) Applicant: Helsing GmbH, 81671 Munich (DE)
(72) Inventor: GJENGSET, Jon, 81671 Munich (DE); WANGLER, Oliver, 81671 Munich (DE)
(74) Representative: Rummler, Felix

(57) **Abstract**

A computer implemented method for exchanging shared data stored in a node (110) of a network (102) with other nodes (110) of the network (102), wherein the shared data (140) is stored using a conflict-free replicated data type, CRDT, especially a delta-state based CRDT, the method (200) comprising: determining (202), at a first node, that a subset of the shared data is to be exchanged; creating (204), at the first node, the subset of the shared data; transmitting (206) the subset to the second node.

## Description

### BACKGROUND OF THE INVENTION

In dynamic network topologies, the neighbours of each compute node changes frequently, and persistent (or even reliable) links are rare. Instead, nodes must opportunistically exchange data with each other so that over time updates disseminate throughout the network. In that way, one node may send a message to another node through the network via a plurality of intermediate nodes.

Traditional solutions often assume reliable any-to-any network links (eg, 4G mobile networks, satellite uplink) that present in-order semantics (eg, TCP), which places significant restrictions on applicable use-cases (eg, underground operation with short network ranges, presence of malicious actors that jam signals). Other solutions assume reliable short-range connections (eg, TCP over radio or WiFi), which fail to take advantage of mobile nodes that can carry data across disconnected partitions, and are not robust in the face of interference or poor signal conditions.

There is a need for computer implemented methods and systems that overcome the beforementioned deficiencies.

### SUMMARY

The present invention, which is defined by the appended claims, provides a computer implemented method for exchanging shared data stored in a node of a network with other nodes of the network.

In an embodiment a computer implemented method for exchanging shared data stored in a node of a network with other nodes of the network, wherein the shared data is stored using a conflict-free replicated data type, CRDT, especially a delta-state based CRDT, the method comprising: determining, at a first node, that a subset of the shared data is to be exchanged; creating, at the first node, the subset of the shared data; transmitting the subset to the second node.

The advantage of this method is that the amount of data that has to be transmitted between nodes is reduced. By transmitting only subsets, bandwidth is saved in contrast to transmitting a whole set of the shared data. This makes data exchange possible even in weak and/or unstable network conditions.

According to an embodiment, creating the subset comprises: identifying timestamps in the CRDT to be eliminated in the subset; eliminating the identified timestamps from the subset; and eliminating the identified timestamps from the causal context of the subset.

By modifying the causal context it is ensured that the shared data on both nodes converge eventually.

The causal context may be a grow-only set of unique identifiers that each identifies an event known or applied to the CRDT. With such a causal context it can be determined which data is comprised in the CRDT. Such an identifier within the causal context may be a timestamp or any other unique identifier.

According to an embodiment, the method further comprises: recursively repeating creating a subset from a subset until the remaining subset is a primitive that is to be retained in the subset; and/or wherein creating the subset comprises splitting a subset in two subsets and updating the causal context of the subset. Wherein primitive in the context of the disclosure means an entry in the state, or shared data, that cannot be recursed into further (such as a number, boolean, or string). The CRDT may be a nested data structure, where some of the updates are itself CRDTs. The recursive algorithm enables that timestamps for parent entries in the state are preserved even if a subset is computed from the nested child state. If this were not done, the resulting overall subset would be missing timestamps for the path to the state that is been subset.

Another embodiment of the invention comprises a computer implemented method for exchanging shared data stored in a node of a network with other nodes of the network, the method comprising: receiving, at a first node a transmission from a second node, wherein the transmission comprises a digest value of the shared data stored in the second node and/or to be exchanged, wherein the digest value unambiguously identifies and describes the content of the shared data stored in a node and/or to be exchanged; comparing the received digest value with the digest value of the shared data stored in the first node; determining, based on the comparing, that at least a part of the shared data has to be exchanged between the first node and the second node; exchanging at least the part of the shared.

The method has the advantage, that as described above, in a network a node is able to exchange only missing parts of shared data and thereby saving transmitting time, bandwidth and power.

In an embodiment the exchanging comprises: creating, at the first node, a subset of the shared data based on the determined part; and transmitting the subset to the second node.

In an embodiment, creating the subset comprises: identifying timestamps in the CRDT to be eliminated in the subset; eliminating the identified timestamps from the subset; and eliminating the identified timestamps from the causal context of the subset.

In an embodiment the method further comprising: recursively repeating creating a subset from a subset until the remaining subset is a primitive that is to be retained in the subset; and/or wherein creating the subset comprises splitting a subset in two subsets and updating the causal context of the subset.

The benefit of these embodiments is as described above.

The transmission that is received by a node can be a unicast transmission that may be directly addressed to the node. The transmission may also be a broadcast, multicast or anycast message.

In an embodiment, where the transmission is a broadcast from a second node, the determining comprises: determining, at the first node, based on the comparing, that the shared data stored in the first node is missing at least a part of the shared data stored in the second node and/or that at least a part of the shared data stored in the second node is newer than the shared data stored in the first node; and the exchanging comprises: requesting, at the first node, based on the determining, at least the missing and/or newer part of the shared data from the second node; receiving, at the first node, at least a part of the shared data from the second node..

The benefit of broadcasting is as for the previous claim, except that if the transmission is a broadcast, it lets all recipients within range learn of both the sender's presence and their current state, such that each recipient knows to update their neighbourhood lists and can send missing data to the transmitter without an additional round-trip.

In a preferable embodiment the first node may update the shared data stored in the first node with the received shared data.

In an embodiment, where the transmission is a broadcast or a request from a second node, the determining comprises: determining, at the first node, based on the comparing, that the shared data stored in the second node is missing at least a part of the shared data stored in the first node and/or at least a part of the shared data stored in the second node is older than the shared data stored in the first node; and the exchanging comprises: sending, from the first node at least a part of the shared data to the second node.

In this case, the first node sends a subset of shared data to the second node, wherein the subset is either based on the broadcast or on a request. This request may result from the above mentioned method.

Independently from the exchanging of subsets of shared data, in an embodiment the method may further comprise: updating a network topology based on the broadcast, wherein the network topology comprises active or available nodes in the network the shared data could be exchanged.

This network topology may be a list maintained at the node, which lists all currently active or available nodes within the communication range. This list can also be used for dissemination of the updated shared data. By combining the digest transmission with the broadcast, network load is reduced by sending only one message to convey adjacency and up-to-dateness of the shared data.

It may be that the network, for example a radio network, is only available for a short period of time. To make best use of such short transmission windows, when the node receives updated data from another node, after a request or initially sent, the node may directly send these updates to all nodes currently on its network topology list. By doing this, the updated data may be disseminated faster throughout the network. In other words by having knowledge both of which neighbours are present and what data they currently hold, a node that has only brief access windows to the network has enough information to strategically choose how to make use of that limited transmission time.

In an embodiment, the shared data may be stored using a conflict-free replicated data type, CRDT, especially a delta-state based CRDT. CRDTs are useful for shared data that has to be maintained on different and scattered nodes. CRDTs are specifically designed for such shared data, that eventually converge to a same state. The further advantage of this is that even if messages are reordered or dropped by the network, or have to traverse multiple hops in the network, all shared state eventually converges to the same data.

In an embodiment, the digest value may comprise a causal context of at least a part of the CRDT. The causal context of a CRDT contains the timestamps (and only the timestamps) that are included in the CRDT. As such the causal context unambiguously represents the state of the CRDT. The causal context can easily be used for comparing with other causal context. The benefit is that it can be determined which node is missing which data with a single message. Therefore, a minimal bidirectional exchange of shared data can easily be realized.

The invention further comprises a computer implemented method for exchanging shared data stored in a node of a network with other nodes of the network, the method comprising: broadcasting, at a first node, a digest value of the shared data stored in the first node to the network, wherein the digest value unambiguously identifies and describes the content of the shared data stored in a node.

The broadcasting has two benefits. It may be used to determine a network topology and to inform surrounding nodes of the shared data stored in it. The network topology may be a list of other network nodes within the communication range. The broadcasting lets multiple nodes all learn the same information with a single transmission rather than multiple node-to-node transmissions.

The digest value may comprise a causal context of the shared data, which may be stored using a CRDT. The digest value may further comprise a unique identifier for the sending node and/or a timestamp or counter which increments for each sent broadcast.

The digest value is internally updated when the shared data has been modified. In an embodiment, the broadcasting is done periodically and/or when the shared data has been modified and/or when a change of an environmental parameter occurs. Such an environmental parameter may be the availability of a network or the arrival of the node at a specified geographic location or region.

In an embodiment, the broadcast may comprise information that the node only maintains a subset of the shared data and information on that subset. By this, neighbouring nodes may adapt the shared data that they send according to this information. The advantage is that the amount of data can be reduced. This is especially beneficial where the network is weak or instable.

In an embodiment the network is a wireless network, for example a radio network. Although the present invention is not limited to wireless networks its benefits may not be as strong in wired networks. Since in wired networks, generally connection between network nodes is persistent and has a high bandwidth. The radio network may be any kind of radio network, like LTE, 5G, WiFi or the like.

The invention also comprises a node in a network comprising means for carrying out the method of any of the preceding claims. Such a node may be a mobile device such as a drone or a vehicle in general or a smartphone. The node can also be a stationary device such as a base station.

The invention further comprises a computer program comprising instructions which, when the program is executed by a node, cause the node to carry out an inventive method.

The invention further comprises a computer-readable medium comprising instructions which, when executed by a node, cause the node to carry out an inventive method.

### BRIEF DESCRIPTION OF THE DRAWINGS

The present invention may be better understood from reading the following description of non-limiting embodiments, with reference to the attached drawings, wherein:
Fig. 1 shows a schematic overview of a radio network with three nodes;
Fig. 2 shows a flow chart of a computer implemented method for exchanging shared data stored in a node of a network with other nodes of the network.
Fig. 3 shows a flow chart of a specific embodiment of the step 204 of Fig. 1
Fig. 4 shows a flow chart of another embodiment of a computer implemented method for exchanging shared data stored in a node of a network with other nodes of the network.
Fig. 5 shows a flow chart of another embodiment of a computer implemented method for exchanging shared data stored in a node of a network with other nodes of the network
Fig. 6 shows a flow chart of another embodiment of a computer implemented method for exchanging shared data stored in a node of a network with other nodes of the network.

### DETAILLED DESCRIPTION OF THE PREFERRED EMBODIMENTS

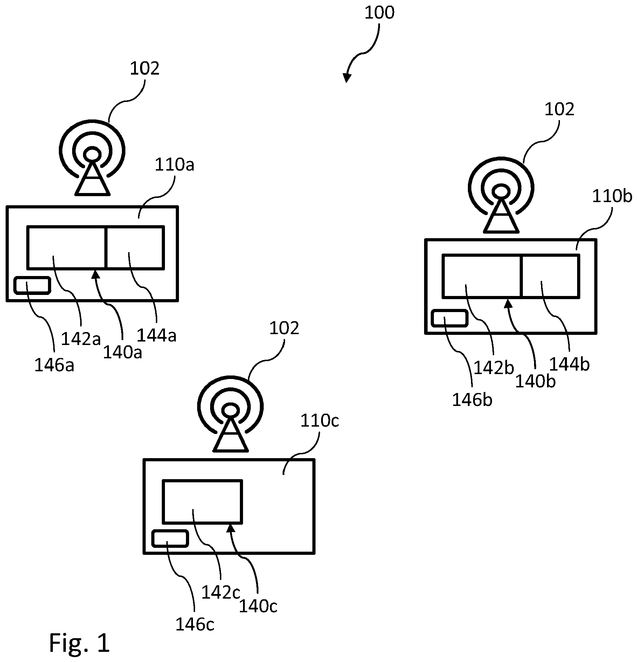

**Figure 1** shows a schematic overview of a data processing system 100 with three nodes 110a, 110b and 110c in a radio network 102. The radio network may be a packet-based radio network like LTE, 5G, WiFi, or the like. The radio network can also use a non-packet based protocol or no protocol at all. The herein described invention is thus not limited to any specific network technology. It even can be used in wired networks.

The nodes 110a and 110b store shared data 140, whereas node 110c only stores a subset 142 of the shared data 140. The shared data 140, 142 is stored in this example as delta- state conflict-free replicated data type, Delta-CRDT.

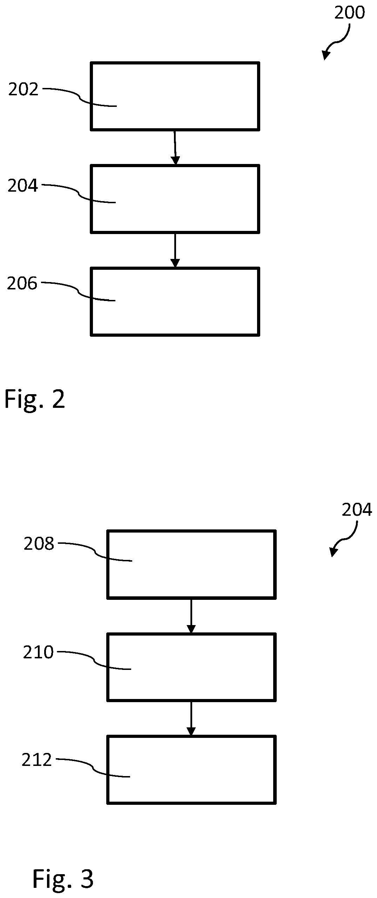

Figure 2 shows a flowchart of a computer implemented method 200 for exchanging shared data stored in a node of a network with other nodes of the network 102. The method is performed at a first node, for example the node 110a in Figure 1.

This method is based on the presumption that the shared data 140 is stored using a conflict-free replicated data type, CRDT, especially a delta-state based CRDT.

At step 202, the first node is determining that only a subset of the shared data is to be exchanged. The determining may comprise comparing the causal contexts of the shared data of both nodes. The comparing may check if and which timestamps are included in both causal contexts. The determining may further or alternatively comprise comparing other properties of the shared data, for example security policies or explicit node preferences, as explained later. The above list of properties is not exhaustive and may comprise other or further properties of the shared data or even properties unrelated to the data.

At step 204 the first node is creating the subset of the shared data. The subset is for example based on the comparing. It may also be based on the intent of the exchange. The comparing can result in a determination that the shared data of the first node is newer, then the subset may be crated to update the second node. It can also be determined that the first node needs updated shared data from the second node, thus a subset for a request can be created.

Step 206 comprises transmitting the subset to the second node.

**Figure 3** shows further details for the step 204 in Fig. 1 for creating a subset.

Step 208 comprises identifying timestamps in the CRDT to be eliminated in the subset. This identifying can be based on the comparing of the causal contexts of the shared data of different nodes. The identifying may as indicated above be based on the intent. There are generally two possibilities.

When a first node is about to share an update with a second node, it first eliminates all data that the second node should not get. Each removed data entry also implies at least one timestamp that is associated with said data entry, and those timestamps are removed from the causal context that is always shared with the update to the second node.

When a first node requests data from a second node, the second node should send at most the data that the first node actually requests, which may mean eliminating data (and their corresponding timestamps) from the data the second node has detected that the first node is missing but does not care about, meaning that is not in the request.

It may be possible that a node decides that not all shared data is actually shared with all other nodes in the network. It may restrict some of the data to specific nodes. Such data may be identified to be eliminated not based on the comparing but based on other criteria. Such criteria can be for example but not limited to: security clearance, type of node, owner of node, position of node or the like.

Step 210 comprises eliminating the identified timestamps from the subset. By eliminating the timestamps also the associated data is also eliminated. The data set is removed from the CRDT and so is its timestamp.

Step 212 comprises eliminating the identified timestamps from the causal context of the subset.

In an embodiment the subset is created by recursively repeating creating 204 a subset from a subset until the remaining subset is a primitive that is to be retained in the subset. The CRDT is a nested data structure. That means, a given entry in the CRDT can contain a list or map whose values are in turn CRDTs. To extract or eliminate specific data, the CRDT has to be recursively processed. Each bit of actual data in a CRDT is stored under a given timestamp, which means that if a piece of data is removed, the corresponding timestamp is also removed.

The following pseudo code shows an exemplary implementation of the recursive subset creation. 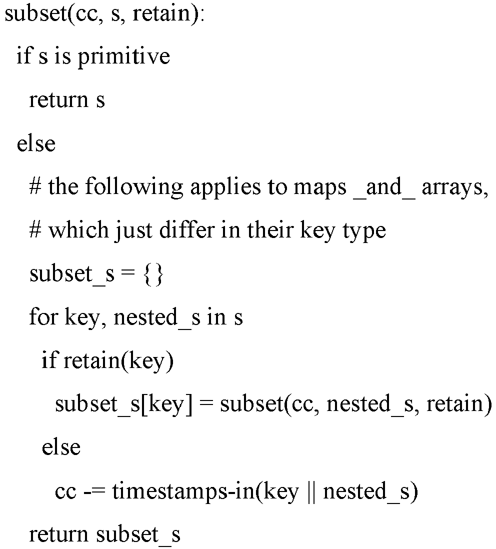 Wherein:
cc' = copy of cc //
s' = subset(cc', s, retain)
crdt' = (cc', s')

In an alternative embodiment creating 204 the subset comprises splitting a subset in two subsets and updating the causal context of the subset.

Th subset may be divided into two parts according to the following pseudo code: split(cc1, cc2, s, partition): 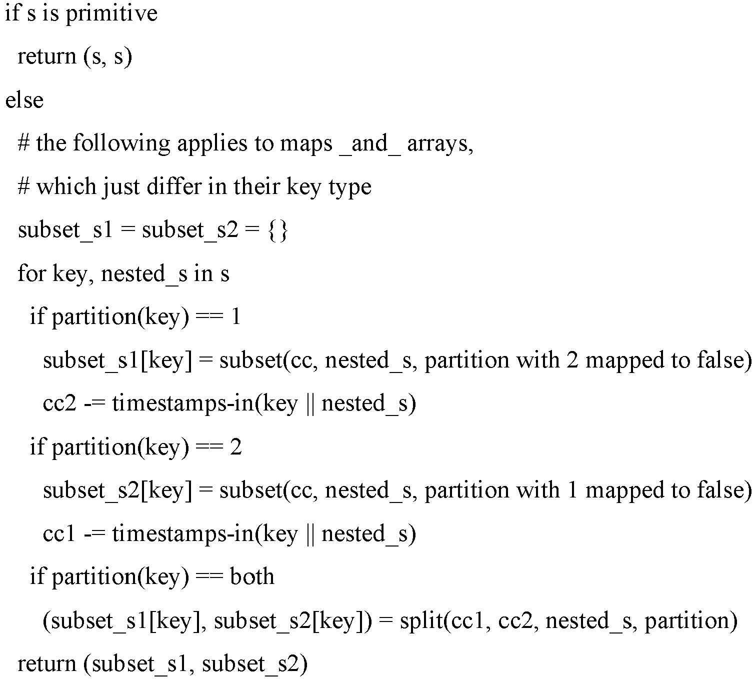 Wherein:
cc1 = copy of cc
cc2 = copy of cc
(s1, s2) = subset(cc1, cc2, s, partition)
crdt1 = (cc1, s1)
crdt2 = (cc2, s2)

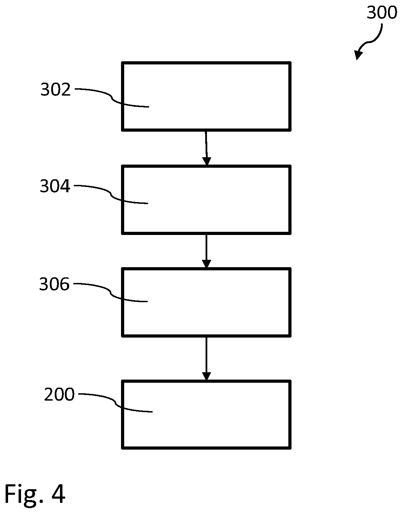

**Figure 4** shows a flowchart for a computer implemented method 300 for exchanging shared data stored in a node 110 of a network 102 with other nodes 110 of the network 102 according to another embodiment.

Step 302 comprises receiving at a first node 110a a transmission from a second node 110b, wherein the transmission comprises a digest value 146b of the shared data 140b stored in the second node 110b and/or to be exchanged, wherein the digest value 146 unambiguously identifies and describes the content of the shared data 140 stored in a node 110a and/or to be exchanged.

Step 304 comprises comparing the received digest value 146b with the digest value 146a of the shared data 140a stored in the first node 1 10a. The digest value may be any summary and/or representation of the shared data, or overall state, that is smaller in size than the shared data, yet is easily comparable to allow determining what is missing from each shared data.

In an embodiment, the shared data 140 may be stored using a conflict-free replicated data type, CRDT, especially a delta-state based CRDT. In such a case the digest value may comprises a causal context of at least a part of the CRDT. The causal context comprises one or several timestamps of the CRDT, each corresponding to an update of data in the CRDT.

The comparing can be done, in principle, by determining which timestamps are equal in both causal context and which are only in one of the two causal contexts.

Step 306 comprises determining, based on the comparing 206, that at least a part of the shared data has to be exchanged between the first node 110a and the second node 110b.

Finally step 200 comprises exchanging at least the part of the shared data. The exchanging is done according to the method described with respect to Fig. 1 and/or 2. Special attention is directed to the creating 204 of subsets of the shared data. This subset is created based on the determined part that has to be exchanged.

It can be determined that both nodes needs updated parts from the respective other node. The exchange may be both ways.

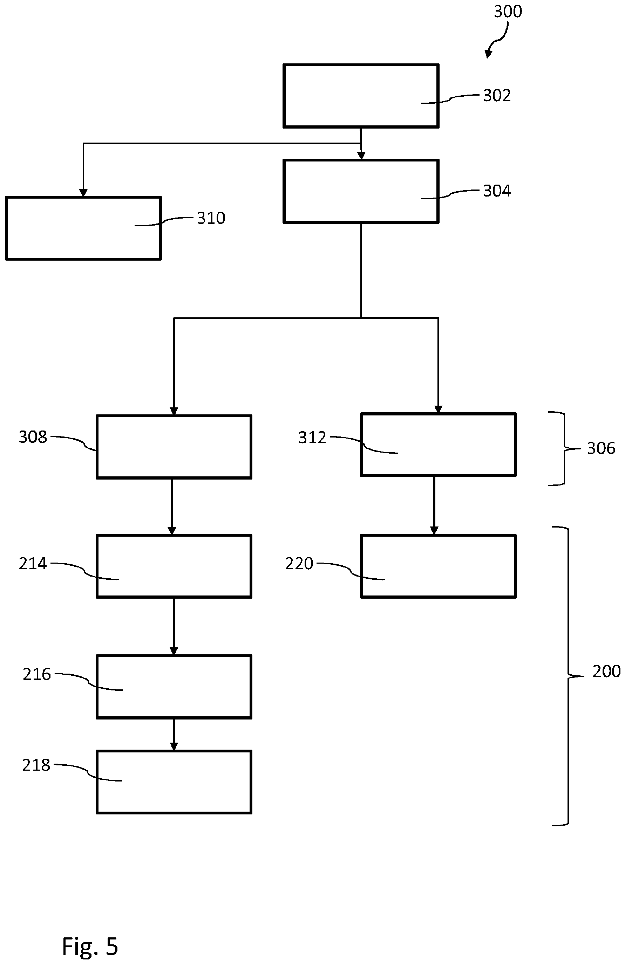

**Figure 5** shows another embodiment of the method 300 of Fig. 4. Fig. 5 covers two scenarios.

In a first scenario, the transmission is a broadcast from a second node. After receiving the broadcast in step 302, the broadcast message is used in step 310 to update a network topology.

This network topology may be a list maintained at each node. In this list, the node stores information on other nodes in the network, that are currently active and/or available for communication with the node. The first node 110a or the other nodes 110b, 110c may be moving objects, like drones or vehicles. Additionally, the network 102 may be instable or limited in range. It is thus not always the case that a node can communicate with other nodes. The broadcast message, received from the second node 110b informs the first node 110a that the second node 110b is in its communication range.

The broadcast message is further used in step 304 for comparing the received digest value with the digest value of the shared data stored in the first node 110a.

The determining step 306 further comprises in step 308, determining, at the first node 110a, based on the comparing 304, that the shared data 140a stored in the first node 110a is missing at least a part 144b of the shared data 140b stored in the second node 110b and/or that at least a part of the shared data 140b stored in the second node 110b is newer than the shared data 140a stored in the first node 110a.

The exchanging step 200 then comprises several further steps as following.

Step 214 comprises requesting, at the first node 1 10a, based on the determining 208, at least the missing and/or newer part 144b of the shared data 140b from the second node 1 10b. The request may comprise a causal context of shared data containing the timestamps of the missing parts.

As described above, the first node 110a may identify those timestamps that are missing in the shared data 140a of the first node 110a to be included in the subset. The timestamps which are equal are eliminated. In addition, the first node 110a may decide that some of the missing timestamps are of no interest for the first node 110a and exclude them as well. The causal context is then sent to the second node 110b as the request.

Step 216 comprises receiving 216, at the first node 110a, at least a part 144b of the shared data 140b from the second node 110b.

Step 218 comprises updating the shared data 140a stored in the first node 110a with the received shared data.

In a second scenario, the transmission is a broadcast or a request from a second node. After receiving the broadcast in step 302 and comparing the digest values in step 304, the determining step 306 further comprises in step 312: determining 312, at the first node 110a, based on the comparing 206, that the shared data 140b stored in the second node 110b is missing at least a part 144a of the shared data 140a stored in the first node 110a and/or at least a part 144b of the shared data 140b stored in the second node 110b is older than the shared data 140a stored in the first node 110a.

As described above, the request may contain a causal context, which contains the timestamps of the missing and requested data.

The exchanging step 200 then comprises the following further step.

Step 220 comprises sending, from the first node 110a at least a part 144a of the shared data 140a to the second node 110b.

In this case, in the creating step 204, the first node 110a identifies those timestamps to be included in the subset, that are contained in the request. Here again, the first node 110a may decide that some of the requested data is not to be shared with other nodes. So even if a timestamps is in the request, the first node 110a may not include the timestamp in the subset.

It is noted that the both scenarios are not mutually exclusive. That is both scenarios may be based on one received broadcast. This may be the case, when in the comparing step 204 deltas on both digests occur, meaning that some timestaps are equal in both digests, some are only in the first and some are only in the second.

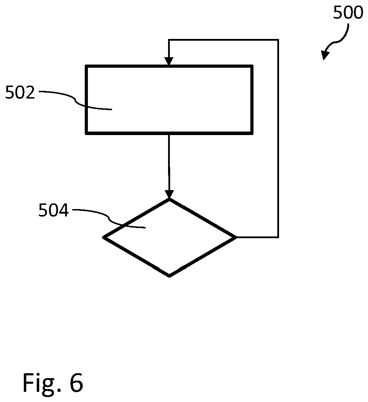

**Figure 6** shows a computer implemented method 500 for exchanging shared data stored in a node 110 of a network 102 with other nodes 110 of the network 102, the method comprising: Step 502 comprises broadcasting, at a first node 110a, a digest value 146a of the shared data 140a stored in the first node 110a to the network 102, wherein the digest value 146 unambiguously identifies and describes the content of the shared data 140 stored in a node 110a. By broadcasting the digest value of the shared data 140a stored in the first node 110a two goals are achieved. First the first node 110a signals other nodes in the communication range that it is available for communication. This may be new because the first node 110a just moved into the range or the network got available.

The second goal is at the same time inform the other nodes in the network of the state, or update state, of the shared data 140a stored in the first node 1 10a. The nodes in the network 102 receiving this broadcast may react according to the method 300 of the Figs. 3 or 4.

When a node receives updated data from another node in the network, either after a request or directly, it may update the digest value 146.

In step 504 the node checks if a periodic timer has expired and/or if the shared data 140 has been modified. If either or both is the case, another broadcast is transmitted to the network.

The following pseudo code shows an exemplary embodiment of the inventive methods. Comments indicate the matching method steps.

In an embodiment the number of missed broadcasts (beacons) from a specific node (src) can be counted as shown in the following pseudo code. The missed broadcast number can be used to update the network topology. In the below example a node is removed from the network topology list if more than three beacons are missed. For this the broadcast may comprise, in addition to the digest value, an identifier that unambiguously identifies the sender of the broadcast. If a broadcast is received, the missed counter for this identified sender is reset to zero.

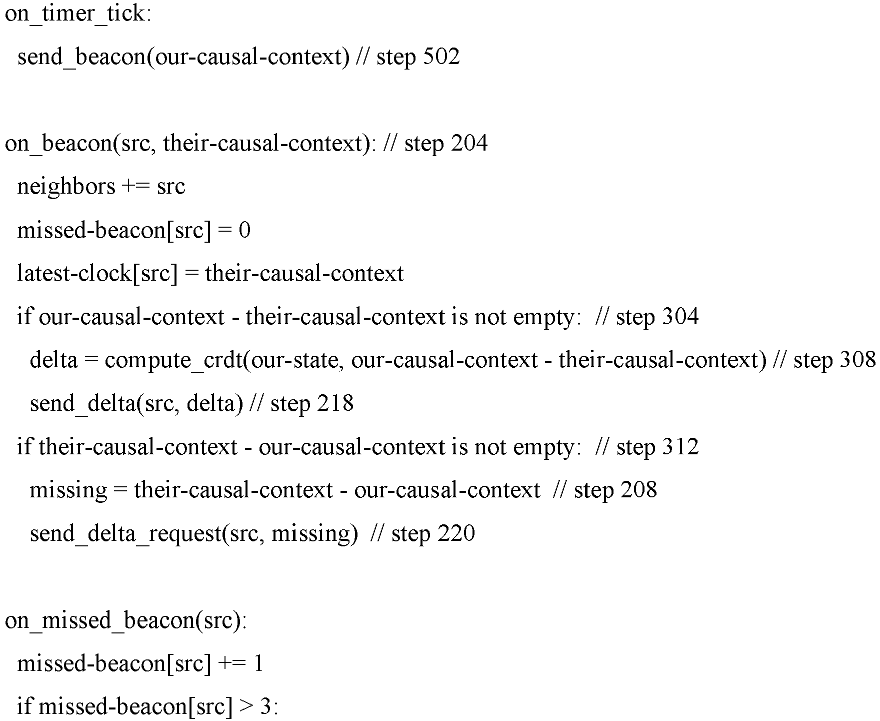

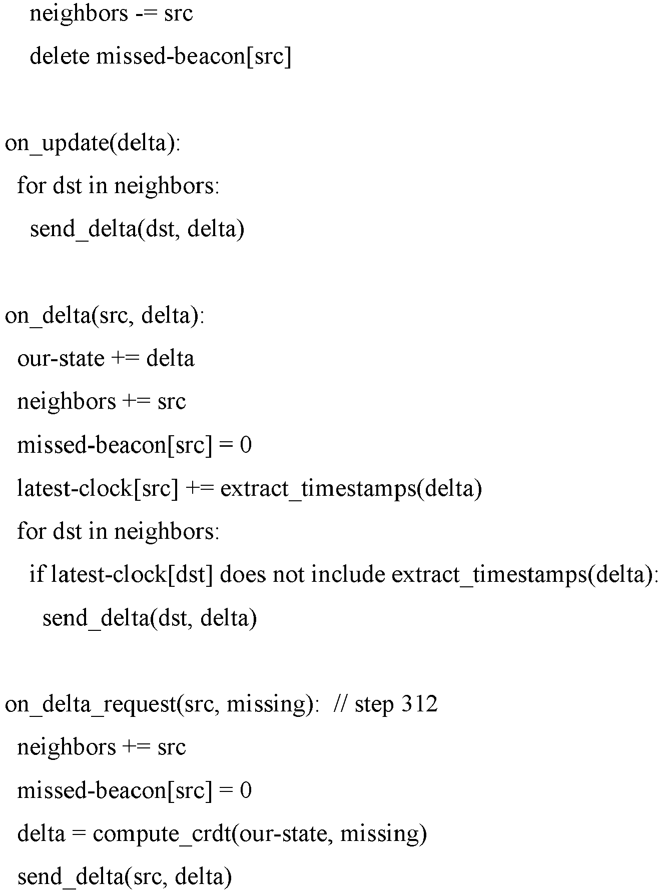

In an embodiment, the broadcast may comprise information that the first node 110a only maintains a subset 142 of the shared data 140 and information on that subset 142. In such a case a second node 110b may consider this information when creating the subset for submitting to the first node 1 10a. In this case the second node 110b may eliminate timestamps from the subset that are of no interest even if they are missing in the first node.

## Claims

1. A computer implemented method for exchanging shared data stored in a first node (110a) of a network (102) with a second node (110b) of the network (102), wherein the shared data (140) is stored using a conflict-free replicated data type, CRDT, especially a delta-state based CRDT, the method (200) comprising:
determining (202), at the first node (1 10a), that a subset of the shared data is to be exchanged;
creating (204), at the first node (1 10a), the subset of the shared data;
transmitting (206) the subset to the second node (1 10b).

2. The method according to claim 1, wherein creating (204) the subset comprises:
identifying (208) timestamps in the CRDT to be eliminated in the subset;
eliminating (210) the identified timestamps from the subset; and
eliminating (212) the identified timestamps from the causal context of the subset.

3. The method of claim 2, further comprising: recursively repeating creating (204) a subset from a subset until the remaining subset is a primitive that is to be retained in the subset; and/or wherein creating (204) the subset comprises splitting a subset in two subsets and updating the causal context of the subset,.

4. A computer implemented method for exchanging shared data (140) stored in a node (110) of a network (102) with other nodes (110) of the network (102), preferably wherein the shared data (140) is stored using a conflict-free replicated data type, CRDT, especially a delta-state based CRDT and/or preferably wherein the digest value comprises a causal context of at least a part of the CRDT, the method (300) comprising:
receiving (302), at a first node (1 10a) a transmission from a second node (110b), wherein the transmission comprises a second digest value (146b) of the shared data (140b) stored in the second node (1 10b) and/or to be exchanged, wherein the digest value (146) unambiguously identifies and describes the content of the shared data (140) stored in the second node (1 10b) and/or to be exchanged;
comparing (304) the received second digest value (146b) with a first digest value (146a) of the shared data (140a) stored in the first node (1 10a);
determining (306), based on the comparing (304), that at least a part of the shared data has to be exchanged between the first node (110a) and the second node (110b); and
exchanging (200) at least the part of the shared data.

5. The method of claim 4, wherein the exchanging (200) comprises:
creating (204), at the first node (1 10a), a subset of the shared data based on the determined part; and
transmitting (206) the subset to the second node (110b).

6. The method of claim 5, wherein creating (204) the subset comprises:
identifying (208) timestamps in the CRDT to be eliminated in the subset;
eliminating (210) the identified timestamps from the subset; and
eliminating (212) the identified timestamps from the causal context of the subset.

7. The method of claim 6, further comprising: recursively repeating creating (204) a subset from a subset until the remaining subset is a primitive that is to be retained in the subset; and/or wherein creating (204) the subset comprises splitting a subset in two subsets and updating the causal context of the subset,.

8. The method of any of claims 4 to 7, wherein the transmission is a broadcast from a second node, the determining (306) comprises:
determining (308), at the first node (110a), based on the comparing (304), that the shared data (140a) stored in the first node (110a) is missing at least a part (144b) of the shared data (140b) stored in the second node (1 10b) and/or that at least a part of the shared data (140b) stored in the second node (110b) is newer than the shared data (140a) stored in the first node (110a);
and the exchanging (200) comprises:
requesting (214), at the first node (110a), based on the determining (208), at least the missing and/or newer part (144b) of the shared data (140b) from the second node (110b);
receiving (216), at the first node (1 10a), at least a part (144b) of the shared data (140b) from the second node (110b);
preferably and updating (218) the shared data stored in the first node with the received shared data.

9. The method of any of claims 4 to 8, wherein the transmission is a broadcast or a request from the second node, the determining comprises: determining (312), at the first node (110a), based on the comparing (304), that the shared data (140b) stored in the second node (1 10b) is missing at least a part (144a) of the shared data (140a) stored in the first node (1 10a) and/or at least a part (144b) of the shared data (140b) stored in the second node (110b) is older than the shared data (140a) stored in the first node (110a);
and the exchanging (200) comprises:
sending (220), from the first node (1 10a) at least a part (144a) of the shared data (140a) to the second node (110b).

10. The method of claim 8 or 9, wherein the method further comprises: updating (310) a network topology based on the broadcast, wherein the network topology comprises active or available nodes in the network the shared data could be exchanged with.

11. A computer implemented method for exchanging shared data stored in a node (110) of a network (102) with other nodes (110) of the network (102), the method comprising:
broadcasting (502), at a first node (1 10a), a digest value (146a) of the shared data (140a) stored in the first node (110a) to the network (102), wherein the digest value (146) unambiguously identifies and describes the content of the shared data (140) stored in a node (110a);

12. The method of claim 11, wherein the broadcasting is done periodically and/or when the shared data (140) has been modified and/or when a change of an environmental parameter occurs and/or wherein the broadcast comprises information that the node (110) only maintains a subset (142) of the shared data (140) and information on that subset (142).

13. A node (110) in a network (102) comprising means for carrying out the method of any of the preceding claims.

14. A computer program comprising instructions which, when the program is executed by a node (110), cause the node (110) to carry out the method of any of claims 1 to 12.

15. A computer-readable medium comprising instructions which, when executed by a node (110), cause the node (110) to carry out the method of any of claims 1 to 12.
